# EUROPÄISCHE PATENTSCHRIFT

(11) **EP 0 394 724 B1**
(45) Veröffentlichungstag und Bekanntmachung des Hinweises auf die Patenterteilung: **13.03.1996**
(21) Anmeldenummer: 90106574.8
(22) Anmeldetag: 05.04.1990
(51) Int. Cl.: B65G 47/90, B65G 59/12

(54) **Kurvenantrieb zum Bewegen eines Transportorgans in horizontalen und vertikalen Bewegungsrichtungen**
Cam drive for moving a transport organ in horizontal and vertical moving directions
Entraînement à cames pour le mouvement d'un organe de transport dans des sens de déplacement horizontal et vertical

(30) Priorität: 26.04.1989 DE 3913664
(43) Veröffentlichungstag der Anmeldung: 31.10.1990
(73) Patentinhaber: SCHULER PRESSEN GmbH & Co., D-73033 Göppingen (DE)
(72) Erfinder: Thudium, Karl, D-7328 Wäschenbeuren (DE); Rieger, Walter, D-7320 Göppingen (DE)

(56) Entgegenhaltungen:
- DE-A- 2 808 357

## Beschreibung

Die Erfindung betrifft einen Kurvenantrieb zum Bewegen eines Transportorgans entsprechend dem Oberbegriff des Anspruchs 1.

In einer Presse werden Kurvenantriebe mit beispielsweise Doppelkurvenscheiben ausgeführt, um Platinen aus einer Entstapeleinrichtung in einer vertikalen Bewegung zu entnehmen, diese in die Presse in einer horizontalen Bewegung einzubringen und in der Bearbeitungsstation in wiederum einer vertikalen Bewegung abzulegen. In gleicher Weise ist es auch möglich, mit einer solchen Einrichtung Werkstücke der letzten Bearbeitungsstufe zu entnehmen und einer Ablageeinrichtung zuzuführen.

In der US-A-2,867,185 wird eine solche Einrichtung zum Entnehmen von Werkstücken aus einer Presse beschrieben mit einem Lenkerparallelogramm aus zwei Parallelstangen, die in einer oberen Basis drehbeweglich gelagert sind. Die obere Basis ist in einer linearen Bewegung heb- und senkbar. Die Bewegung der oberen Basis ist von einer Kurve abgegriffen, die an dem auf- und niedergehenden Stößel der Presse befestigt ist. Die untere Basis wird durch das Transportorgan für die Wertstücke gebildet. Hierbei ist eine der Parallelstangen von der gleichen Kurve aus in einer Schwenkbewegung antreibbar für eine Umsetzbewegung der Werkstücke. Während die vertikale Entnahme- und Ablegebewegungen für das Transportorgan durch die vertikale Bewegung der oberen Basis vorgegeben ist, erfolgt die horizontale Umsetz- und Rücklaufbewegung auf Kreisbögen um die oberen Drehgelenke der Parallelstangen. Diese Kreisbogenbewegung erfordert einerseits eine unverhältnismäßig große vertikale Bewegung für das Werkstück, um dieses aus dem Werkzeugunterteil herauszuheben und berührungsfrei zu transportieren und eine große Öffnungsweite von Werkzeugoberteil und -unterteil und andererseits eine gleiche Beabstandung von Werkzeugmitte und Ablagemitte zur Mitte der oberen Basis, wenn die Höhen von Entnahme und Ablage gleich sein sollen. Darüberhinaus sieht die Auslegung der stößelbewegten Kurve keine Ablagebewegung vor.

In dem AWF-Blatt 634/636 B des Vereins Deutscher Maschinenbau-Anstalten, Beuth-Verlag GmbH, Berlin, ist mit Bild 55 ein zusammengesetztes Kurvengetriebe dargestellt. Dieser Kurventrieb weist eine erste Kurvenscheibe für eine horizontale Bewegung und eine zweite Kurvenscheibe für eine vertikale Bewegung eines Transportorgans auf. Die an die Kurvenscheiben gelegten Kurvenfolgerhebel wirken auf ein Lenkerparallelogramm, wobei beide Kurvenfolgerhebel Gestänge des Lenkerparallelogramms darstellen. Das Transportorgan wird hierbei in einer nahezu sinoiden Bewegung geführt mit verhältnismäßig großem vertikalen und demgegenüber geringem horizontalen Bewegungsanteil.

Desweiteren ist aus der DE-A1-28 08 357 eine Vorrichtung zum Umsetzen von Werkstücken bekannt mit einer Werkstückgreifeinrichtung. Die Vorrichtung weist einen Gelenkviereckmechanismus auf mit zwei etwa senkrechten Verbindungsstangen zwischen einem Antriebsglied und einem Folgeglied, wobei die Werkstückgreifeinrichtung von dem Folgeglied gehalten ist. Der Antrieb des Gelenkvierecks weist vom Hauptantrieb gedrehte Kurven auf für einen senkrechten Antrieb und für einen horizontalen Antrieb. Die Verbindungsstangen sind hierfür an einer Kurvenfolgerplatte gelenkig angeschlossen, die an den Kurven zwanggeführt ist. Die Bewegungen der Kurven für die horizontalen und vertikalen Bewegungen des Transportorgans werden dabei auf die eine Kurvenplatte übertragen, die hierfür in zwei Schwingstangen gelagert ist und so die Koppel dieses weiteren Viergelenks bildet.

Demgegenüber ist es Aufgabe der Erfindung, unter Verwendung der Mittel im Oberbegriff des Anspruchs 1 die vertikalen und horizontalen Bewegungen in Linearbewegungen auszuführen mit kurvenförmigen Übergängen zwischen diesen Bewegungen und im Gegensatz zu den vertikalen Bewegungen verhältnismäßig langer horizontaler Umsetzbewegung.

Diese Aufgabe ist gelöst durch die Merkmale des Kennzeichens von Anspruch 1. Anspruch 2 stellt eine bevorzugte Ausgestaltung der Erfindung dar.

Von besonderem Vorteil hierbei ist, daß die Korrekturbereiche für die Fertigung der Kurvenscheiben vorgebbar sind und somit keine zusätzlichen baulichen Maßnahmen erfordern.

Anhand eines Ausführungsbeispiels soll im folgenden die Erfindung näher erläutert werden.

Es zeigen:
- Fig. 1: den Zuführbereich einer Presse mit einer Einrichtung nach der Erfindung,
- Fig. 2: einen Schnitt entsprechend dem Schnittverlauf II-II in Fig. 1, und
- Fig. 3: den Zuführbereich entsprechend der Darstellung in Fig. 1 mit näheren Einzelheiten zur Erläuterung der Erfindung.

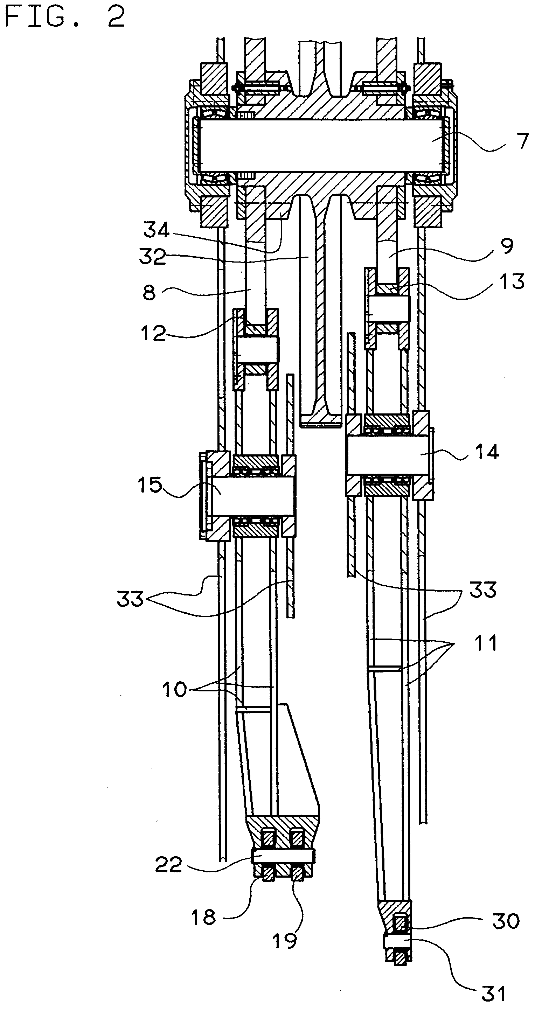

Mit Position 1 ist der Zuführbereich für Platinen zu einer Einzelpresse oder zu der Kopfpresse einer Mehrstufenpresse angedeutet. In der Presse ist ein Stößel 2 auf- und niedergehend gelagert mit einem Werkzeugoberteil 3. Position 4 verweist auf ein Werkzeugunterteil auf dem Pressentisch bzw. Schiebetisch. Der Presse ist eine Zufördereinrichtung 5 zugeordnet, mit welcher Platinen aus einer Entstapelstation 6, einem Rollenförderer o.dgl. Mittel, der ersten Bearbeitungsstufe mit dem Werkzeug 3, 4 zugeführt wird. Die Zufördereinrichtung 5 weist eine Welle 7 auf, die vom Antrieb für den Stößel 2 der Presse mit angetrieben wird. Auf dieser Welle 7 sind Kurvenscheiben 8, 9 drehfest aufgesetzt, wie es aus Fig. 2 näher erkennbar ist. Den Kurvenscheiben 8 und 9 sind Kurvenfolgerhebel 10 bzw. 11 zugeordnet, die über Rollen 12, 13 vermittels Stellmittel kraftschlüssig gegen je eine der Kurvenbahnen der Kurvenscheiben 8, 9 gelegt sind. Die Kurvenfolgerhebel 10, 11 sind zweiarmig ausgeführt und in gestellfesten Drehpunkten 14, 15 schwenkbar gelagert. Der Kurvenfolgerhebel 10 ist mit dem der Rolle 13 fernen Endbereich an eine erste, hier obere Basis 18 eines Lenkerparallelogramms gelegt. Das Lenkerparallelogramm umfaßt weiterhin zwei Parallelstangen 19, 20 und eine zweite, hier untere Basis 21. Die Parallelstangen 19, 20 sind in Drehgelenken 22 bzw. 23 schwenkbeweglich gelagert. Die Längen der Basen 18, 21 untereinander sowie die Längen der Parallelstangen 19, 20 untereinander sind gleich. Parallel zu dem der Rolle 13 fernen Hebelarm des Kurvenfolgerhebels 10 ist ein Parallellenker 16 in einem weiteren gestellfesten Drehpunkt 17 schwenkbeweglich gelagert. Die Länge des Parallellenkers 16 entspricht der Länge des rollenfernen Hebelarms an dem Kurvenfolgerhebel 10. Der Abstand der gestellfesten Drehpunkte 15 und 17 entspricht dem Abstand der Drehgelenke 22 an der ersten Basis 18 bzw. dem der Drehgelenke 23 an der zweiten Basis 21. Der Kurvenfolgerhebel 11 ist über einen Anlenkhebel 30 an eine der Parallelstangen 19, 20 oder, wie gezeigt, an die zweite Basis 21 gelegt. Kurvenfolgerhebel 11 und Anlenkhebel 30 bilden ein Drehlager 31. An der zweiten Basis 21 ist ein Transportorgan 24 befestigt in beispielsweise paralleler Ausrichtung zur zweiten Basis 21. Das Transportorgan 24 weist z.B. Saugnäpfe auf zum Halten der entnommen und zu transportierenden Platinen, wobei die Näpfe in ihren Abständen zueinander und auch die Schräglage des Transportorgans insgesamt über Stellmittel 29 ein-bzw. verstellbar sind.

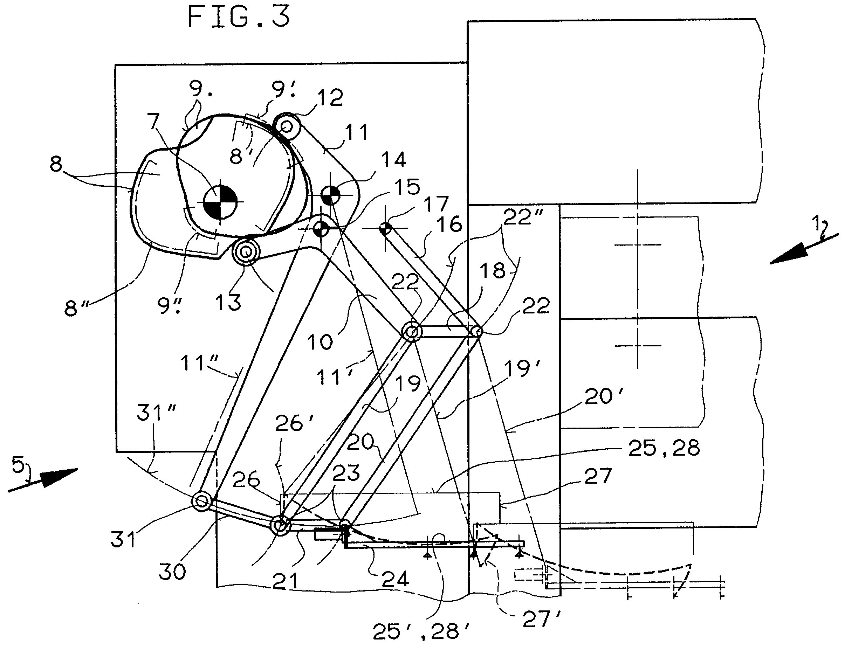

Die Platinen sollen auf einer Bahnkurve bewegt werden, die einen kurzen vertikalen Anteil 26 zum Entnehmen der Platinen vom Stapel, bei 6, einen längeren horizontalen Anteil 25 zum Transport der Platinen in das Werkzeugunterteil 4 und einen kurzen Anteil 27 für das Ablegen der Platinen in dem Werkzeugunterteil 4 aufweist. Die Rückführbewegung des Transportorgans 24 ist mit 28 positioniert und kann beispielsweise auch den Kurvenverlauf der Kurve 25 aufweisen, wie er in Fig. 3 gezeigt ist. Die ablegebewegung 27 kann einen horizontalen Anteil aufweisen und gegenüber der Entnahmebewegung 26 verkürzt sein. Der Bewegungsverlauf des Transportorgans 24 ist auf die geometrischen Verhältnisse der Werkzeugs 3, 4 und die Entfernung zur Entnahmestation 6 abzustimmen.

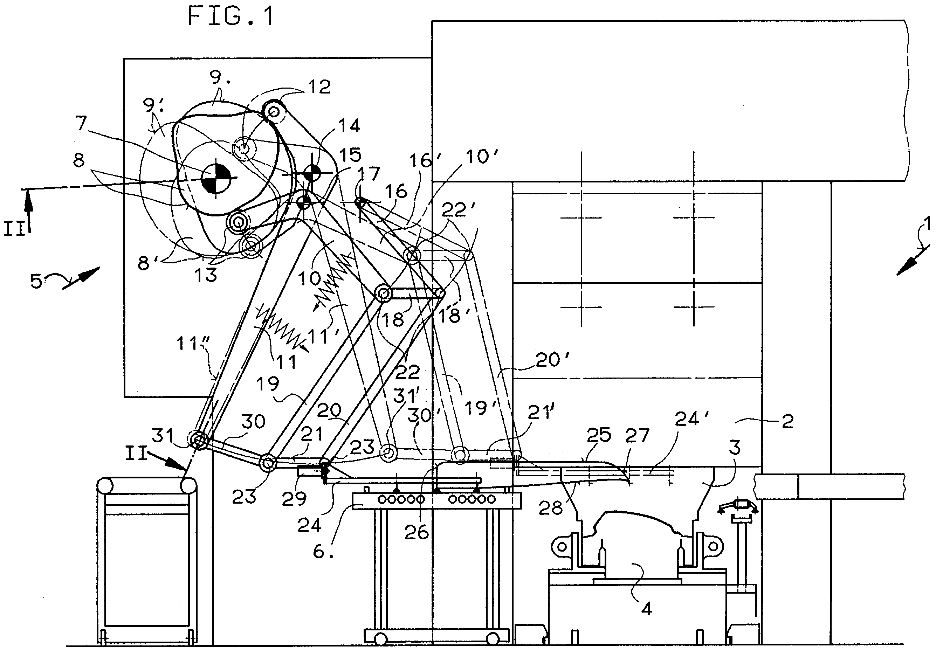

Fig. 1 zeigt sowohl die Anfangsstellungen der Kurvenscheiben 8, 9, der Kurvenfolgerhebel 10, 11, des Lenkerparallelogramms 18, 19, 20, 21 des Anlenkhebels 30 und des Transportorgans 24, als auch deren Stellungen beim Abwurf bzw. Ablegen der Platinen in das Werkzeugunterteil 4. Diese Stellungen bzw. Lagen sind mit einem erhöht gesetzten Strich nach der Positionszahl gekennzeichnet.

Der Querschnitt in Fig. 2 läßt sowohl die Lagerung der Welle 7, als auch die Lagerung der Kurvenfolgerhebel 10, 11 in Wälzlagern erkennen. Mit 33 sind Ständerbleche der Presse positioniert zum Festlegen der Lagerstellen. In den unteren Endbereichen der Kurvenfolgerhebel 10, 11 sind mit 22 bzw. 31 Drehgelenke positioniert für die scharnierartig bewegliche Lagerung der ersten Basis 18, einer Parallelstange 19 und des Anlenkhebels 30. Im oberen Endbereich jedes der Kurvenfolgerhebel 10, 11 ist je eine Lagerstelle für die an die Kurvenscheiben 8, 9 gelegten Rollen 12, 13 erkennbar. Auf der Welle 7 ist weiterhin ein Zahnrad 32 mit der Nabe 34 drehfest gelagert. Das Zahnrad 32 dient dem Antrieb der Welle 7. Die Nabe 34 dient gleichzeitig der Drehbefestigung der Kurvenscheiben 8, 9. Mit 14 und 15 sind die gestellfesten Drehpunkte der Kurvenfolgerhebel 10, 11 positioniert.

Anhand von Fig. 3 soll das Wesen der Erfindung näher erläutert werden. Für gleiche Bauteile sind gleiche, wie die zuvor verwendeten Kennziffern benutzt worden. Wird über die Drehbewegung der Welle 7 die Drehbewegung der Kurvenscheiben 8, 9 bewirkt, wird bei einer Drehbewegung dieser im Uhrzeigersinn zunächst der Kurvenfolgerhebel 10 ausgelenkt bis in eine in Fig. 1 gezeigte Lage 10′ mit der nach oben bewegten ersten Basis 18, während der Kurvenfolgerhebel 11 auf der Kurve der Kurvenscheibe 9 geführt ist. Würde für diesen Bewegungszeitraum bzw. Drehwinkel die Bewegung des Kurvenfolgerhebels 11 nicht korrigiert, d.h. verbleibe dieser in einer Rast der Kurve, sodaß in diesem Bewegungszeitraum der Anlenkpunkt 31 in der in Voll-Linien dargestellten Lage verbleibt, würde sich das linke der beiden unteren Drehgelenke 23 auf einem Kreisbogen 26′ um den Anlenkpunkt 31 bewegen. Der sich hierdurch ergebende Bewegungsfehler im Vergleich zu einer geraden, vertikalen Bahn 26, wird durch eine Korrektur im Bewegungszeitraum 9′ der Kurve an der Kurvenscheibe 9 ausgeglichen durch ein Korrekturmaß, das je nach Lagerung des Kurvenfolgerhebels 11 ein (Plus-) Draufmaß oder ein (Minus-) Untermaß sein kann gegenüber einer bislang verwendeten Kurvenscheibe, sodaß der Kurvenfolgerhebel 11 eine Bewegung in die angedeutete Lage 11'' und zurück in die in Voll-Linien gezeigte Lage ausführt. Der Anlenkpunkt 31 wird hierbei auf dem Kreisbogen 31'' um den gestellfesten Drehpunkt 14 nach links und danach nach rechts in die in Voll-Linien gezeigte Stellung bewegt. Erreicht das Lenkerparallelogramm aus den Gestängeteilen 18, 19, 20, 21 die Ablegelage in der Presse am Ende der Umsetzbewegung 25 und erfolgt hier keine Korrektur an der Kurvenscheibe 9, wird sich der linke der beiden unteren Drehgelenke 23 auf einem Kreisbogen 27′ bewegen. Der eine geradlinige, vertikale Bewegung 27 bewirkende Bereich ist an der Kurvenscheibe 9 mit 9'' angegeben. Der Bereich 9'' kann dem zuvor beschriebenen Bereich 9′ an der Kurvenscheibe 9 gegenüberliegen. In Fig. 1 ist mit 28 eine Rücklaufbewegung für das Transportorgan 24 gekennzeichnet, die jedoch einen völlig anderen Verlauf nimmt als die Rücklaufbewegung 28 in Fig. 3, um den Bewegungszeitraum für den Transport der Platinen in die Presse infolge kürzerer Rücklaufbewegung zu vergrößern, sodaß Länge und Drehwinkel der Bereiche 9′ bzw. 9'' dementsprechend anzupassen sind. Die Größe des Korrekturmaßes wird im wesentlichen bestimmt durch die geometrischen Längen der Kurvenfolgerhebel 10, 11, die Länge des Anlenkhebels 30 und die Länge der vertikalen Bewegungen 26, 27.

Für den Bewegungszeitraum der Umsetzbewegung 25 sind Korrekturen auf der Kurvenscheibe 8 erforderlich durch Abmaße in der zuvor zur Kurvenscheibe 9 beschriebenen Weise in zumindest dem Bereich 8′. Weist die Kurvescheibe 8 hierfür keine Korrektur auf, bewegt sich das Lenkerparallelogramm 18, 19, 20, 21 während der Umsetzbewegung 25 mit seinen Parallelstangen 19, 20 um die oberen Drehgelenke 22 auf einem Kreisbogen 25′. Die Länge der Bewegung auf diesem Kreisbogen 25′ ist abhängig von der Länge der Bewegung des Anlenkpunktes 31 auf dem Kreisbogen 31''. Da die Bewegung des linken der beiden unteren Drehgelenke 23 nicht unbedingt symmetrisch zu dem linken der oberen Drehpunkte 22 erfolgen muß, setzt die Ablegebewegung 27 bzw. 27′ tiefer ein als die zunächst durch Anheben der oberen Drehgelenke 22 erreichte Höhenlage. Ist eine gleiche Rücklaufbewegung 28 wie die Umsetzbewegung 25 erwünscht, bedarf es gleicher Korrekturmaßnahmen an der Kurvenscheibe 8 in einem Bewegungszeitraum, Drehwinkel, der mit 8'' gekennzeichnet ist. Die Festlegung auf ein Parallelgestänge mit gleichlangen und parallel zueinander ausgerichteten Parallelstangen 19, 20 sowie gleichlangen und parallel zueinander ausgerichteten Basen 18, 21 ist sinnvoll, aber nicht unbedingte Voraussetzung für die Erfindung. Abweichungen von der Ausgangsform eines Parallelgestänges sind im Rahmen der Erfindung mit abgedeckt. Es sind beispielsweise andere Längenwerte für das Lenkerparallelogramm als Viergelenk-Gestänge vorgebbar mit entsprechender Anpassung der Bereiche 8′, 8'' bzw. 9′, 9'', um in den Bewegungszeiträumen Bewegungsbahnen, gleich denen in den Fig. 1 und 3 gezeigten, zu erzeugen. Die Kurvenscheiben 8, 9 können nach Bewegungsgesetzen gefertigt sein, wie sie aus beispielsweise der DE-A-32 08 023 oder aus der DE-A-35 30 823 bekannt sind. Auch kann die Anlage der Kurvenfolgerhebel 10, 11 vermittels der Rollen 12, 13 eine formschlüssige sein, wie es in den zu den Bewegungsgesetzen zuvor genannten Druckschriften oder in der DE-A-36 40 469 gezeigt ist. Die in Fig. 1 gezeigten kurvenförmigen Übergänge zwischen den Umsetz- bzw. Rücklaufbewegungen 25, 28 und den Entnahme-bzw. Ablegebewegungen 26, 27 sind an den Kurvenscheiben 8, 9 vorgebbar.

## Patentansprüche

1. Kurvenantrieb zum Bewegen eines Transportorgans (24) in einer horizontalen Umsetz- und Rücklaufbewegung (25, 28) und in an den beiden Enden dieser Bewegung sich anschließenden vertikalen Entnahme- und Ablegebewegungen (26, 27), mit zwei synchron miteinander getriebenen Kurvenscheiben (8, 9) und mit Kurvenfolgern (10, 11) zur Übertragung der von den Kurven (8, 9) abgegriffenen Bewegungen auf ein Lenkerparallelogramm aus erster Basis (18) und zweiter Basis (21) und Parallelstangen (19, 20), wobei das Transportorgan (24) an der zweiten Basis und somit abtriebsseitig angeordnet ist, **dadurch gekennzeichnet,** daß die Kurvenfolger ein erster Kurvenfolgerhebel (11) und ein zweiter Kurvenfolgerhebel (10) sind, die jeweils in einem separaten, gestellfesten Drehpunkt (14, 15) gelagert sind, von denen der erste Kurvenfolgerhebel (11) über einen Anlenkhebel (30) an einer der Parallelstangen (19, 20), der zweite Kurvenfolgerhebel (10) an der ersten Basis (18) des Lenkerparallelogramms angreifen, und daß für lineare vertikale und lineare horizontale Bewegungen des Transportorgans:
- die zweite Kurvenscheibe (8) zumindest einen bereich (8', 8'') aufweist für den Bewegungszeitraum der horizontalen Bewegung (25) des Transportorgans (24) zum Ausgleich der Kreisbogenbewegung (25', 28') der Parallelstangen (19, 20) um ihre Drehgelenke (22), indem die erste Basis (18) und mit dieser die Drehgelenke (22) der Parallelstangen (19, 20) angehohen werden, und
- die erste Kurvenscheibe (9) bereiche (9', 9'') aufweist für den Bewegungszeitraum der vertikalen Bewegungen (26, 27) des Transportorgans (24) zum Ausgleich der Kreisbewegung (26') des Anlenkhebels (30) um den Anlenkpunkt (31), indem der Anlenkpunkt (31) des Anlenkhebels (30) in einer Richtung entgegen der Richtung der Umsetzbewegung (25) bewegt wird.

2. Kurvenantrieb nach Anspruch 1, **dadurch gekennzeichnet,** daß die Kurvenfolgerhebel (10, 11) zweiarmige Hebel sind, deren dem Lenkerparallelogramm abgewandte Endbereiche über Rollen (12, 13) kraftschlüssig an jeweils eine der Kurven (8, 9) gelegt sind, und daß parallel zu dem an die erste Basis (18) des Lenkerparallelogramms (18, 19, 20, 21) angreifenden Hebelarm des Kurvenfolgerhebels (10) ein diesem Hebelarm gleichlanger Parallellenker (16) angeordnet ist, der beabstandet zu dem Hebelarm des Kurvenfolgerhebels (10) mit einem Endbereich an der ersten Basis (18) angreift und mit dem anderen Endbereich in einem gestellfesten Drehpunkt (17) schwenkbeweglich gelagert ist.

## Claims

1. Cam drive for moving a conveyor member (24) in a horizontal transfer and return motion (25, 28) and in vertical removal and lay-down motions (26, 27) following on from both ends of the said motion, having two synchronously driven cam discs (8, 9) and having cam followers (10, 11) for transmitting the motions picked up from the cams (8, 9) to a link parallelogram made up of a first base (18) and second base (21) and parallel rods (19, 20), the conveyor member (24) being disposed on the second base and thus on the power take-off side, characterized in that the cam followers are a first cam follower lever (11) and a second cam follower lever (10), which are respectively mounted in a separate, stand-fixed pivot point (14, 15), of which the first cam follower lever (11) acts via an articulated lever (30) upon one of the parallel rods (19, 20) and the second cam follower lever (10) acts upon the first base (18) of the link parallelogram, and in that for linear vertical and linear horizontal motions of the conveyor member
- the second cam disc (8) has at least one region (8', 8''), for the period of motion of the horizontal motion (25) of the conveyor member (24), for compensating the circular arc motion (25', 28') of the parallel rods (19, 20) about their swivel joints (22), in that the first base (18) and, with this, the swivel joints (22) of the parallel rods (19, 20), are raised, and
- the first cam disc (9) has regions (9', 9''), for the period of motion of the vertical motions (26, 27) of the conveyor member (24), for compensating the circular motion (26') of the articulated lever (30) about the hinge point (31), in that the hinge point (31) of the articulated lever (30) is moved in a direction counter to the direction of the transfer motion (25).

2. Cam drive according to Claim 1, characterized in that the cam follower levers (10, 11) are twin-armed levers, whose end regions facing away from the link parallelogram are placed via rollers (12, 13) in frictional contact with one of the cams (8, 9) in each case, and in that parallel to that lever arm of the cam follower lever (10) which acts upon the first base (18) of the link parallelogram (18, 19, 20, 21) there is disposed a parallel link (16), which is equal in length to the said lever arm and which, distanced from the lever arm of the cam follower lever (10), acts with an end region upon the first base (18) and is mounted by the other end region, in pivotably mobile arrangement, in a stand-fixed pivot point (17).

## Revendications

1. Entraînement à cames pour l'activation d'un organe de transport (24) pour un mouvement de transfert et de retour (25, 28) horizontal et pour un mouvement de reprise et d'évacuation (26, 27) vertical, suivant les deux phases extrêmes du premier mouvement, cet entraînement comportant deux cames à disque (8, 9) entraînées de façon synchrone et des suiveurs de cames (10, 11) pour transmettre les mouvements desdites cames (8, 9) à un parallélogramme de commande composé d'une première base (18) et d'une deuxième base (21) et de tiges parallèles (19, 20), l'organe de transport (24) étant solidaire de la deuxième base et de ce fait disposé du côté entraîné, **caractérisé en ce que** les suiveurs de cames sont constitués d'un premier levier (11) suiveur de came et d'un second levier (10) suiveur de came, qui sont respectivement montés séparément sur des points de rotation fixes (14, 15), le premier levier (11) étant couplé par une biellette (30) à l'une des tiges parallèles (19, 20) le second levier (10) étant couplé à la première base (18) du parallélogramme de commande, et en ce que pour un mouvement linéaire vertical et linéaire horizontal de l'organe de transport :
- la deuxième came à disque (8) présente au moins une zone (8', 8'') correspondant au temps de mouvement horizontal (25) de l'organe de transport (24) pour compenser le mouvement en arc de cercle (25', 28') des tiges parallèles (19, 20) autour de leurs articulations (22), la première base (18) et avec cette dernière les articulations (22) des tiges parallèles (19, 20) étant soulevées, et
- la première came à disque (9) présente des zones (9', 9'') correspondant au temps de mouvement vertical (26, 27) de l'organe de transport (24) pour compenser le mouvement en arc de cercle (26') de la biellette (30) autour du point de rotation (31), le point de rotation (31) de la biellette (30) étant déplacé dans une direction opposée à celle du déplacement du transfert (25).

2. Entraînement selon la revendication 1, **caractérisé en ce que** les leviers suiveurs de cames (10, 11) sont des leviers à deux bras, dont les extrémités éloignées du parallélogramme de guidage sont en appui ferme par l'intermédiaire de galets respectivement contre une des cames (8, 9) et en ce qu'un guidage parallèle (16) de même longueur que le bras de levier, est monté parallèlement au bras de levier du levier suiveur de came (10) en appui contre la première base (18) du parallélogramme de guidage (18, 19, 20, 21), ce guidage parallèle étant écarté du bras de levier du levier suiveur de came (10) et ayant une extrémité couplée à la première base (18) et une autre extrémité articulée sur un point de rotation fixe (17).
